# EUROPEAN PATENT APPLICATION

(11) **EP 4 404 506 A1**
(43) Date of publication of application: **24.07.2024**
(21) Application number: 23152066.9
(22) Date of filing: 17.01.2023
(51) Int. Cl.: H04L 9/40, G06N 3/0455, G06N 3/0475, G06N 3/0895, G06N 3/094

(54) **COMPUTING SYSTEM ORCHESTRATION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A method of orchestrating a composite computing system or service deployed in a composite computing system is disclosed. A prompt is received from a user or an automated process and used to prompt a trained generative model. As a result image data is generated by the trained generative model, the image data encoding information to orchestrate the composite computing system or a service deployed in the composite computing system. The encoded information in the image data is decoded into a script and used to orchestrate the composite computing system or service.

## Description

The present disclosure relates to composite computing system orchestration including but not limited to deploying and managing cyber security architectures, deploying and managing network services such as for voice over internet protocol services.

### BACKGROUND

Composite computing system orchestration, such as to deploy and manage cyber security architectures in a communications network, is a complex and time-consuming task much of which is currently achieved manually. Cyber security architectures typically involve multiple components such as firewalls, traffic monitoring, encryption, anomaly detection and other components from different manufacturers. Deploying and managing multiple of these types of components is challenging and yet is an ongoing task since there are upgrades and maintenance requirements. The consequences of poor orchestration of cyber security architectures are severe since security breaches of safety critical communications infrastructure may occur.

In the case of network services which are deployed using multiple virtual network functions VNFs in a distributed manner, there is also a need for high quality orchestration. Network services in voice over internet protocol communications networks are used for a wide range of purposes, including but not limited to voice mail, missed call dial back, unwanted caller blocking, call waiting, and others.

The examples described herein are not limited to examples which solve problems mentioned in this background section.

### SUMMARY

Examples of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology comprises a method of orchestrating a composite computing system or service deployed in a composite computing system, the method comprising:
receiving a prompt from a user or an automated process;
prompting a trained generative model using the prompt and receiving as a result image data generated by the trained generative model, the image data encoding information to orchestrate a composite computing system or service deployed in the composite computing system;
decoding the encoded information in the image data into a script; and
using the script to orchestrate the composite computing system or service deployed in the composite computing system.

In this way an automated way of orchestrating a composite computing system or service (such as a communications network or network service) is given. The prompt can be general or high level and yet even so, orchestration is possible; thus novice users are able to orchestrate the composite computing system or service. By using a trained generative model it is possible to take into account potentially conflicting aims for the orchestration in an effective and automated manner.

Preferably the image data encodes information to orchestrate multiple respective composite computing systems or respective services deployed in composite computing systems and wherein the encoded information is decoded into multiple respective scripts, the method further comprising applying the respective scripts to a simulation of the respective composite computing systems or respective services to obtain results and comparing the results against criteria (such as provision constraints of the composite computing system or service which may optionally be provided by a user, e.g. cost/performance constraints) and selecting one of the respective scrips according to the comparison, wherein the selected script is used to orchestrate the composite computing system or service deployed in the composite computing system.

Preferably a conditioning mechanism is used to input the prompt to the trained generative model by converting the prompt into an embedding in a latent space of the generative model. In this way a user is able to control the orchestration even though the prompt may be a high level general instruction.

Preferably the prompt is any of: text, an image, a speech signal; and wherein the prompt expresses a general instruction to orchestrate the composite computing system or service. Thus there is reduced burden of user input since the user can use a variety of different input modalities and is able to use a general rather than a detailed instruction.

Preferably the image data comprises any of: one or more tiled images, one or more images depicting a graph of topology of the composite computing system or service, a two dimensional array of numerical values encoding a graph representing the composite computing system. Thus a variety of different types of images are usable.

Preferably the image data comprises at least one tiled image comprising a plurality of tiles, each tile being a two dimensional shape, and wherein the number and properties of the tiles encode information which may converted to the script for orchestrating the composite computing system or service. Using tiled images gives a visual way for users to inspect the images and gain a general understanding of the information represented in the images. Tiled images are a concise representation of the information needed to generate the scripts and are well suited for processing by generative models including latent diffusion models.

Preferably at least one of the properties is: a degree of overlap of a tile with other tiles or a hue or a saturation. In this way it is possible to increase the amount of information encoded in the images in a scalable manner.

In various examples the method comprises converting an image into a script by parsing the image to form a sequence of tiles, converting each tile in the sequence into a plurality of parameters and constraints (i.e. representing configuration details of the composite computing system or service), and adding the parameters and constraints to a structured text object. This is an efficient and effective way of obtaining a structured text object for orchestrating a composite computing system or service.

In various examples the generative model has been trained using a loss function having a term which takes into account how well the simulation meets the criteria. In this way the generative model is able to generate images which are likely to encode information that orchestrates the composite computing system well and according to the prompt.

In another aspect there is a composite computing system manager comprising:
a processor; and
a memory storing instructions which when executed by the processor cause the communications network manager to perform the method of the first aspect.

The composite computing system manager may be at any node in the composite computing system. Preferably the trained generative model comprises an encoder, a decoder, and a latent diffuser. By using a latent diffuser computation in the latent space brings efficiencies without detriment to accuracy.

In another aspect there is a computer-implemented method of training a generative model comprising:
accessing a plurality of training examples, each training example comprising an image encoding information about how to orchestrate a composite computing system or a service deployed in the composite computing system;
carrying out a first training phase by training an encoder and a decoder of the generative model using adversarial training and using the training examples;
carrying out a second training phase, subsequent to the first training phase, by training a latent diffuser of the generative model using the training examples.

By using a pretraining (first training phase) and then a second training phase it is possible to train the generative model effectively.

Preferably the training in the second training phase is semi-supervised training. In this way the simulator is used as part of the training process.

Preferably the training in the second training phase uses a loss function having a term that takes into account how well a simulation of the composite computing system or service meets the criteria. In this way the generative model is able to generate image data encoding effective ways of orchestrating the composite computing system.

In various examples the method comprises collecting the training examples from empirical observations of scripts created by human users and by generating image data at random using a rule-based system. By using both empirical observations and synthetic training data it is possible to broaden a range of training data examples and include accurate empirical data.

In another aspect there is a composite computing system comprising a composite computing system manager as described herein.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a communications network manager and communications network;
FIG. 2 is a flow diagram of a method of generating a script and executing the script at an orchestrator of a communications network;
FIG. 3 shows two example images generated by a trained generative model of a communications network orchestrator;
FIG. 4 is a schematic diagram of a generative model of a communications network orchestrator;
FIG. 5 is a flow diagram of a method of training a generative model of a communications network orchestrator;
FIG. 6 is a schematic diagram of a communications network node comprising a communications network orchestrator.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s). The following description is given in relation to communications network orchestration. However, it should be understood that the communications network could be replaced by any other composite computing system, and that the network service discussed herein could likewise be any service in the composite computing system.

As mentioned above, communications network orchestration, such as to deploy and manage cyber security architectures in a communications network, is a complex and time-consuming task much of which is currently achieved manually. Similar problems arise in the case of network services which are typically deployed using many VNFs in a distributed fashion and which are to be managed through their life cycle. The inventor has recognized that these orchestration tasks involve optimizing an objective function which is highly complex since there are multiple aims for the communications network or network service which may conflict (such as reducing cost, improving performance, improving security, improving resilience, improving availability). Two examples of such conflicts in aims are now given as non-limiting examples. Reducing cost may conflict with improving performance in many cases. Improving security may conflict with improving availability in some cases. The inventor has recognised that because the communications network or network service is a composite system, formed from a composite of multiple different elements, the complexity of the optimization problem is increased since the complexity scales with the number of elements which may be changed in the communications network or service. The elements are communications network nodes, VNFs, or other equipment or processes implemented in any of software, firmware, hardware.

The inventor has recognized that generative models, such as generative machine learning models, may be used to efficiently and effectively find solutions to the optimization so as to enable automated orchestration of a communications network and/ or network service. A generative machine learning model, also known as a synthetic data generation model, is a machine learning model that can be used to generate content such as images, text, sound, 3D models, video. In the examples described herein the generative machine learning models generate images. Generative machine learning models have a plurality of parameters where the number of parameters may be very large such as hundreds of thousands or millions but which is significantly smaller than the amount of data used to train the machine learning model. The generative machine learning model learns a distribution over a dataset used to train the model and is able to generate instances from that distribution when given a value of a latent variable as input. The generated instances may not be the same as any of the training data instances, that is, the generative machine learning model is able to generalize beyond the examples it was trained on. Generative machine learning models are typically trained using unsupervised learning. The inventor has recognized that by using a generative model it is possible to generate solutions to the problem of how to orchestrate a communications network or network service automatically. Generative models are not typically used to compute optimal solutions. However, in the present technology the generative model is trained using a loss function that takes into account both a loss for unsupervised training and a loss computed using a simulator of the communications network and specified criteria. In this way it is possible for the generative model to compute solutions which tend to orchestrate the communications network or network service in ways which generally meet or work towards the criteria.

In various examples, the generative model is a latent diffusion model with conditioning. A diffusion model is a machine learning model that iteratively applies noise to an input image in a forward diffusion process until the input image becomes an output image comprising only noise. In a reverse process a diffusion model denoises the output image to obtain the input image again. To carry out the reverse process a trained neural network is used such as a U-Net. A latent diffusion model comprises an encoder and a decoder. The encoder maps an input image to a latent space, where the mapping also compresses the input image to a relatively small latent variable z in the latent space. The decoder acts to map a latent variable into an output image. In the case of a latent diffusion model the forward diffusion process and the reverse process (denoising) are performed in the latent space so as to give efficiency. The forward diffusion process and the reverse process are used during training. During operation of the latent diffusion model (after training) it is possible to omit the forward process.

Conditioning mechanisms are used to facilitate control of what the generative model generates. In an example, the conditioning mechanism is an attention mechanism incorporated in the denoising of the diffusion model and/or in a value of a latent variable given to the reverse process of the latent diffusion model as input. In some examples the conditioning mechanism comprises a transformer which is a type of neural network which uses attention mechanisms.

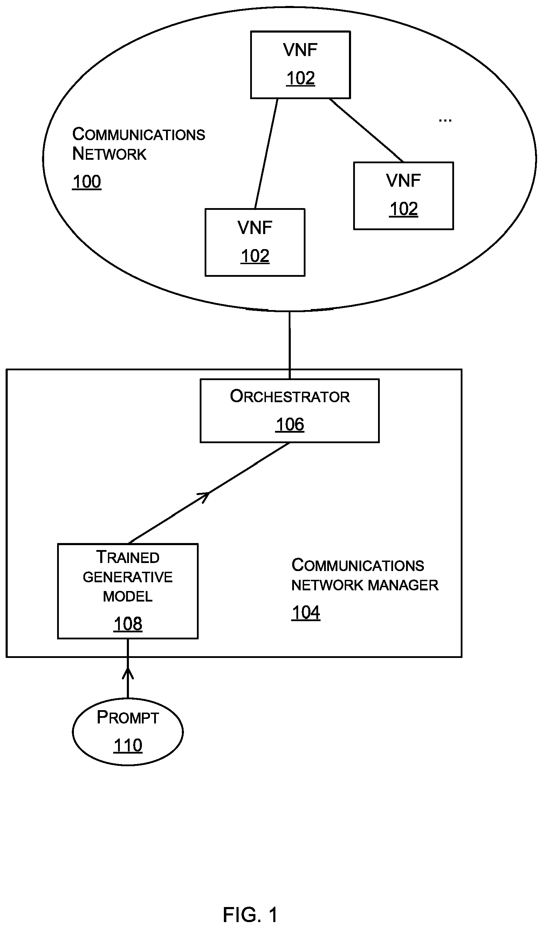

FIG. 1 is a schematic diagram of a communications network manager 104 and communications network 100. The communications network comprises a plurality of nodes connected via communications links. The nodes are routers, switches, firewalls, or other communications network nodes. In the example of FIG. 1 only three communications network nodes are shown for clarity and each of these has a virtual network function 102. In practice there may be many more communications network nodes and/or virtual network functions 102.

Although the example of FIG. 1 shows the communications network having virtual network functions 102 this is not essential. In some cases the communications network comprises a plurality of cyber security elements and other communications network nodes.

An orchestrator 106 is computer implemented and is connected to the communications network 100. The orchestrator is able to send instructions to the communications network 100 in order to instantiate new network nodes or VNFs, shut down existing network nodes of VNFs, restart an existing network node or VNF, deploy upgrades to existing network nodes or VNFs, reconfigure existing network nodes or take other actions on communications network nodes or VNFs. In some cases the orchestrator is rule-based and sends instructions to the communications network in response to one or more rules in the rule-based orchestrator having conditions which are met. In some cases the orchestrator is implemented using Kubernetes (trade mark), Amazon Elastic Container Service (trade mark), Docker Enterprise (trade mark), Azure Kubernetes Service (trade mark) or any other orchestrator.

The communications network manager 104 comprises a trained generative model 108 as well as an orchestrator 106. The trained generative model 108 is in communication with the orchestrator 106 either directly as shown in FIG. 1 or via at least one other computing entity. The trained generative model is trained to generate images which encode information which may be used by the orchestrator 106 to automatically orchestrate the communications network 100 or a network service deployed in the communications network 100. The trained generative model 108 is triggered by a prompt 110 generated by a human user or by a computing entity. The prompt is any of: text, speech, an image. In this way a straightforward way of orchestrating a communications network or network service is achieved. By entering a prompt the orchestrator 106 is able to control the communications network and/or network service in an efficient manner even though the prompt may be imprecise or general. In this way users who are novice are able to orchestrate the communications network well. In this way, automated systems which are not specialised for orchestration of the particular communications network or network service are able to achieve high quality results in terms of the orchestration.

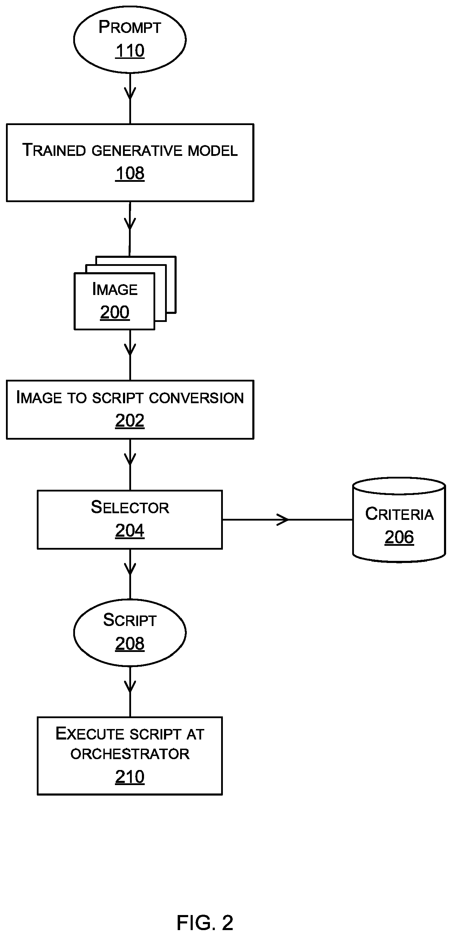

FIG. 2 is a flow diagram of a method of generating a script 208 and executing the script at an orchestrator 106 of a communications network 100. In an example the script 208 is a JSON, JavaScript object notation, script although this is not essential as any type of script may be used. When the script is executed by the orchestrator 106 the orchestrator sends instructions to the communications network and/or VNFs in order to carry out orchestration. In an example a script defines a service build of a network service. In another example a script comprises a Kubernetes configuration file.

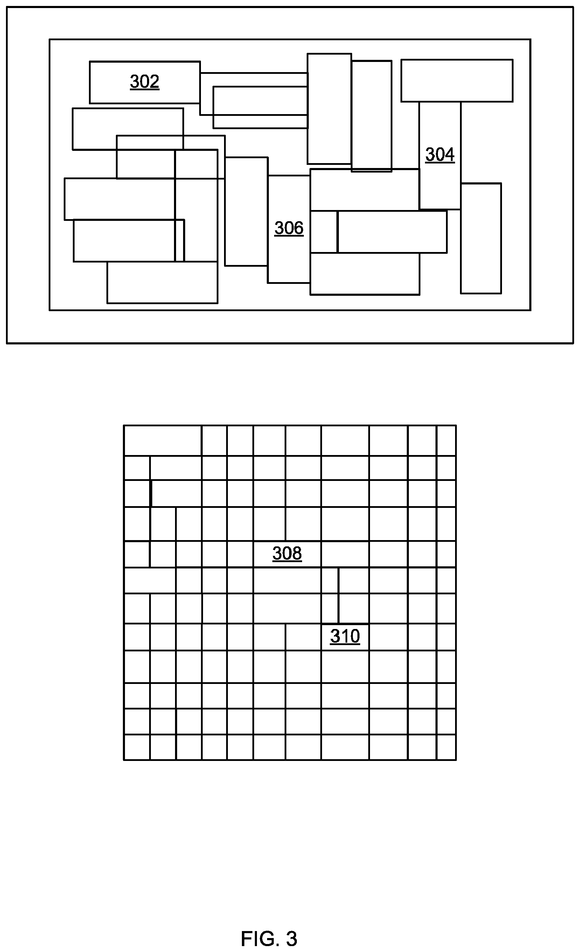

As illustrated in FIG. 2 a prompt 110 is input to the trained generative model 108. As mentioned above, the prompt is any of: text, speech, an image. The prompt is generated by a person or a computer. A non-limiting example of a text prompt is "low cost ring network" in the case that a user wants to orchestrate the communications network 100 to deploy a low cost ring network. Thus the text prompt may be general in that it does not specify in detail what particular ring network to deploy but rather states that a ring network which is low cost is to be deployed. In the case that the prompt is an image, the image may encode information about what to orchestrate in the communications network. More detail about how images encode information about what to orchestrate is given with reference to FIG. 3.

The trained generative model is able to receive input such as a sample taken at random from a gaussian distribution. The input is a value of a latent variable in a latent space of the generative model. Using a reverse (denoising) process of the generative model the value of the latent variable triggers generation of an image 200 which encodes information about how to orchestrate the communications network or network service. In this way information about how to orchestrate is generated. However, the information is "random" since the value of the latent variable triggered generation of an example from a distribution that the trained generative model learnt about during training. In order to enable a user or a computer to influence what information is encoded in the generated image 200 a conditioning mechanism is used. The conditioning mechanism receives a prompt 110.

The prompt 110 is input to the trained generative model 108 using a conditioning mechanism. In an example, the prompt 110 is converted using the conditioning mechanism into an embedding in a latent space of the generative model. The embedding is input to a reverse (denoising) process of the generative model either directly (by concatenating the embedding onto a random sample in the latent space) or using an attention mechanism of the reverse (denoising) process. The conditioning mechanism causes a sample to be taken from the probability distribution represented by the generative model, conditioned on the prompt embedding. In some cases the conditioning mechanism comprises a transformer such that a plurality of words in the prompt are each converted to embeddings in the latent space of the generative model and the embeddings are each input to the reverse (denoising) process in parallel and using self-attention.

In an example, such as that of FIG. 2 the trained generative model 108 is used to generate a plurality of images 200 such as three or four images 200 or another number of images. Each image 200 is generated using the same prompt 110 but different sampled values of the latent variable which are conditioned on the prompt 110. The plurality of images 200 are different instances of solutions of how to orchestrate the communications network or service. The images are converted to scripts using an image to script conversion process 202 which is rule based and described with reference to FIG. 3. A computer implemented selector 204 selects one of the scripts on the basis of criteria 206 specified by a user or a computing system. The criteria 206 are criteria for the orchestration such as cost limits, security criteria, bandwidth limits, reliability limits and other criteria. The selector 204 uses a simulator of the communications network. A simulation is made of the communications network orchestrated according to each one of the scripts. Thus for three images, there are three different scripts and three simulations. Each simulation is assessed using the criteria 206 and a best one of the simulations selected. The script associated with the best simulation is output as script 208.

The simulator of the communications network may be an open source network simulator such as any of: EVE-NG (trade mark), ns-3 (trade mark) or any discrete-event network simulator for internet systems, or any other network simulator.

FIG. 3 shows two example images generated by a trained generative model 108 of a communications network manager 104. In the image at the upper part of FIG. 3 the image comprises a plurality of rectangles of the same size and shape but with different orientations and optionally different colours (not shown). Some of the rectangles are arranged with their longitudinal axis horizontal and some with their longitudinal axis vertical. Some but not all of the rectangles overlap with at least one of the other rectangles.

In the image at the lower part of FIG. 3 the image comprises a plurality of tessellating rectangles, some of which are squares. The rectangles all have the same height but may have different lengths.

Both of the images in FIG. 3 are referred to as tiled images since the rectangles may be referred to as tiles. However, it is not essential to use rectangles as any 2D shape of tile may be used. Each tile has a plurality of properties such as any two or more of: length, height, shape, colour, tone, shade, transparency, hue, number of others tiles the current tile overlaps, or other properties. The number and properties of the tiles encode information which is converted to a script for orchestrating the communications network or network service.

A rule-based image to script converter is able to convert an image, such as one of the images in FIG. 3, into a script. The converter parses the image to form a sequence of tiles. Each tile in the sequence from left to right is converted into a plurality of parameters and constraints that are then added to a structured text object.

In an example, the image to script converter converts dimensions of a tile (a, b) into a cost parameter and a reliability parameter {cost a: reliability b}. In an example, the image to script converter converts red, green, blue intensity values of a tile into a triple {quality 0.7: availability 0.3: shortest route 0.8}. The parameters are then parsed into a JSON object or extendible markup language (XML_ object structure such as:

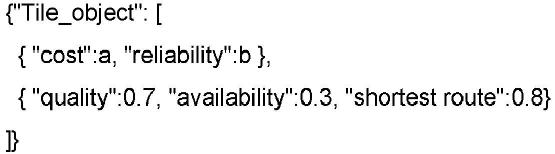

Each tile object from the image is added to a final JSON object in array format. The completed JSON object is then passed to the simulation or real communications network. Using tiled images gives a benefit that human users are easily able to interpret the tiled images by visual inspection.

It is possible to encode more parameters into each tile by utilising a colour space with Hue and Saturation values. If the tiles overlap it is possible to use the degree of overlap as an indication of priority for that tile.

In various examples, the images generated by the trained generative model 108 of the communications network manager 104 depict a graph of the communications network topology comprising a plurality of nodes connected by edges. In some examples the images generated by the trained generative model 108 comprise pixels depicting a plurality of nodes connected by edges. Each node and edge may have a colour encoding that again carries information about reliability, cost, or other factors. As in the case of tiled images, the images comprising pixels depicting nodes connected by edges are straightforward for human users to interpret by visual inspection. The script converter converts between images comprising pixels depicting nodes connected by edges and scripts using rules.

It should be understood that the generative model may generate image data (i.e. data representative of an image, structure, or 2D or 3D model) rather than actual images. In some examples the image data generated by the trained generative model 108 comprises two dimensional arrays (referred to as an adjacency matrix) of float or integer values. The two dimensional arrays are treated as pixel images by the trained generative model 108 and communications network manager 104. Using an adjacency matrix representation gives computational efficiency as compared with using tiled images or images comprising pixels depicting nodes connected by edges. The script converter converts between adjacency matrices and scripts using rules. The image data may alternatively be in other forms, such as matrix field data.

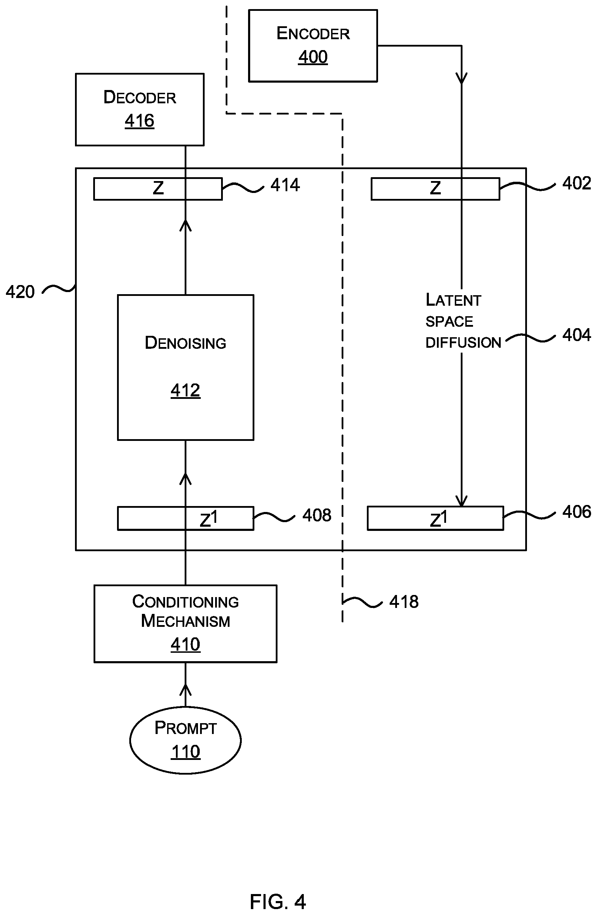

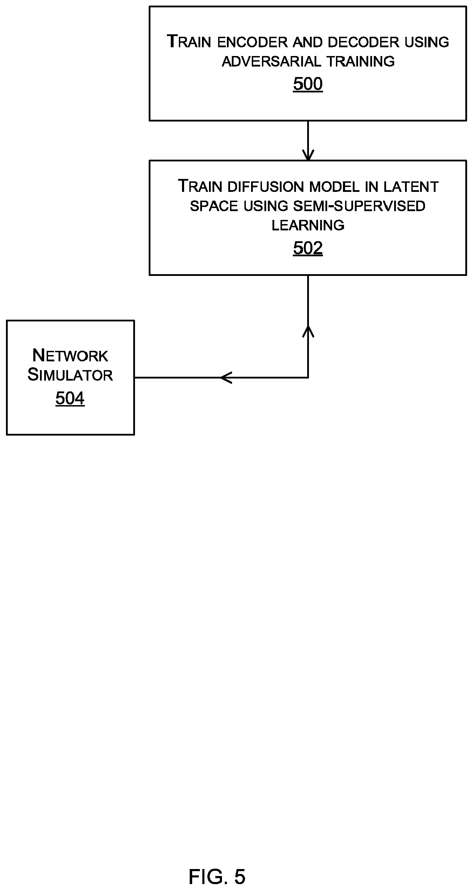

FIG. 4 is a schematic diagram of a generative model 108 of a communications network orchestrator. The generative model 108 of FIG. 4 is in the form used during training (described in more detail with reference to FIG. 5). After training, when the generative model 108 is in use to orchestrate a communications network or network service, the items on the right hand side of line 418 may be omitted or not used. These items comprise an encoder 400 and latent space diffusion 404 mechanism as well as any latent variables 402, 406 associated with the encoder 400 and latent space diffusion mechanism 404.

The generative model 108 comprises an encoder 400, a decoder 416, a latent diffuser 420 and a conditioning mechanism 410. Within the latent diffuser 420 is a latent space diffusion mechanism 404 (forward process) and a reverse (denoising 412) process. Latent variables 402, 406, 408, 414 are present and are vectors or arrays of numerical values. The encoder 400 is a neural network and so is the decoder 416.

The encoder 400 encodes an image into a latent variable 402. The decoder 416 decodes a latent variable 414 into an image. During training the encoder 400 and decoder 416 are trained using unsupervised learning such that a latent variable 402 computed by the encoder from an image, leads to a very similar or identical image when the latent variable 402 is decoded by the decoder 416. The latent variable 402 computed by the encoder 400 is a compressed representation of the image. Thus operations may be carried out on the latent variable 402 more efficiently than equivalent operations on the image.

In the forward process the latent space diffusion mechanism 404 iteratively applies noise to the latent variable 402 according to a schedule. The result is a latent variable z' 406 called a noisy latent variable. Once the end of the schedule is reached the noisy latent variable 406 is mostly noise so that when decoded by decoder 416 the result is an image comprising only noise.

During training the training process, the noisy latent variable z' 408 is the same as latent variable z'406. The noisy latent variable z' 408 is input to the denoising 412 mechanism which is a neural network. The denoising mechanism 412 iteratively removes noise from the latent variable z'408 to produce final latent variable z 414. The training process encourages the denoising mechanism to iteratively remove noise until the final latent variable z produces an image from the decoder 416 similar to the original input image input to encoder 400.

A conditioning mechanism 410 is connected to the denoising mechanism 412 as illustrated in FIG. 4. The conditioning mechanism converts a prompt 110 into an embedding in a latent space of the generative model. Thus the conditioning mechanism is any neural network or other machine learning mechanism for computing an embedding. In some cases the conditioning mechanism is a transformer such that it is able to apply self-attention to the prompt. Self-attention enables the influence of individual parts of the prompt on other individual parts of the prompt to be controlled. The parts may be words in the case of text or parts of an image in the case of image or video prompts. Speech signal prompts may also be used.

The conditioning mechanism 410 enables the prompt 110 to influence the output latent variable 414. As mentioned above, in some cases the conditioning mechanism computes an embedding from the prompt 110 and concatenates the embedding of the prompt onto a latent variable 408 to be processed by the denoising mechanism 412. In some cases the conditioning mechanism computes an embedding from the prompt 110 and concatenates it onto embeddings in the denoising process using an attention mechanism of the reverse (denoising) process. The conditioning mechanism causes a sample to be taken from the probability distribution represented by the generative model, conditioned on the prompt embedding.

The process of FIG. 4 may be used with any of the types of images described with reference to FIG. 3 or other types of image which encode information to orchestrate a communications network or a network service deployed in the communications network.

FIG. 5 is a flow diagram of a method of training a generative model of a communications network orchestrator. Training takes place in two stages.

In a first stage unsupervised pretraining is done. During the first stage the encoder 400 and decoder 416 are trained using adversarial training 500 and so that the encoder compresses an image into a representation in the latent space. During the unsupervised pretraining thousands or tens of thousands of images are used. Each image may be converted to a script for orchestrating the communications network or network service as explained with reference to FIG. 3. The images are collected from empirical observations of scripts created by human users and by converting the scripts to images using rules. Alternatively or additionally the images are generated at random using a rule-based system. The pretraining results in a pretrained model comprising the encoder, decoder and the latent diffuser where the latent diffuser has random initialised parameter values. The training data comprises images of any of the types described with reference to FIG. 3 or other types of images which encode information to orchestrate a communications network or a network service deployed in the communications network.

In a second stage, semi-supervised training 502 of the latent diffuser is carried out. During the second stage the parameters of the encoder and decoder are static. In order to obtain labelled training data for the semi-supervised training the simulator 504 of the communications network is used as well as the criteria 206 of FIG. 2. The training is semi-supervised since part of the loss function uses an objective for unsupervised training that seeks to make the reverse process be a reverse of the forward process. At least one term in the loss function takes into account how well the simulation meets the criteria 206. During the second stage, images used for training in the first stage may be used. Each image is processed using the forward process and then the reverse process. The decoder decodes the result to produce an image which is then converted to a script and applied to the simulator. The simulator is assessed against the criteria and the resulting loss is used as part of the loss for updating weights of the latent diffusion model, together with a loss that encourages the reverse process to produce an image which is an exact reverse of the forward process. Once convergence is reached whereby the parameters of the latent diffusion model are fairly constant or a specified number of training iterations are complete, the model is stored. The trained model may then be used as described with reference to FIG. 2.

In some examples, the process of FIG. 5 is modified so that the loss function does not take into account how well the simulation meets the criteria 206. In this case the second stage of the training is unsupervised training that seeks to make the reverse process be a reverse of the forward process. In this case, once the model has been trained, it is used in the process of FIG. 2 to generate many more than four images and an optimization is computed to find one of the images which gives the best performance at orchestrating the communications network or network service.

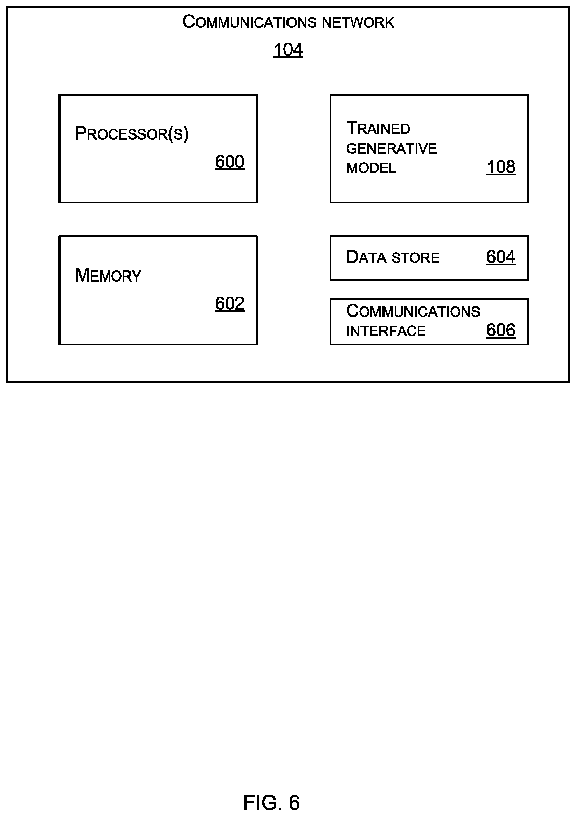

FIG. 6 is a schematic diagram of a communications network manager 104 comprising a communications network orchestrator. The communications network manager 104 is of any suitable form such as a server, router, switch, or other node for use in a communications network.

The communications network manager 104 comprises one or more processors 600 which are microprocessors, controllers or any other suitable type of processors for processing computer executable instructions to control the operation of the device in order to perform the methods of figures 2, 4 and 5. In some examples, for example where a system on a chip architecture is used, the processors 600 include one or more fixed function blocks (also referred to as accelerators) which implement a part of the method of figures 2, 4 and 5 in hardware (rather than software or firmware). That is, the methods described herein are implemented in any one or more of software, firmware, hardware. The communications network manager 104 has a data store 604 holding prompts, images, scripts, latent variable values and other data. The communications network manager 104 has a trained generative model 108 such as that of FIG. 4. Platform software comprising an operating system or any other suitable platform software is provided at the computing-based device to enable application software to be executed on the device. Although the computer storage media (memory 602) is shown within the communications network manager 104 it will be appreciated that the storage is, in some examples, distributed or located remotely and accessed via a network or other communication link (e.g. using communication interface 606). Communication interface 606 may be a port or network card or other equipment which enables the communications network manager to send and receive communications with other communications network nodes.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of orchestrating a composite computing system or service deployed in a composite computing system, the method comprising:
receiving a prompt from a user or an automated process;
prompting a trained generative model using the prompt and receiving as a result image data generated by the trained generative model, the image data encoding information to orchestrate the composite computing system or service deployed in the composite computing system;
decoding the encoded information in the image data into a script; and
orchestrating the composite computing system or service deployed in the composite computing system using the script.

2. The method of claim 1, wherein the image data encodes information to orchestrate multiple respective composite computing systems or respective services deployed in composite computing systems and wherein the encoded information in the image data is decoded into multiple respective scripts, the method further comprising:
applying the respective scripts to a simulation of the respective composite computing systems or respective services to obtain results and comparing the results against criteria; and
selecting one of the respective scrips according to the comparison, wherein the selected script is used to orchestrate the composite computing system or service deployed in the composite computing system.

3. The method of any preceding claim comprising using a conditioning mechanism to input the prompt to the trained generative model by converting the prompt into an embedding in a latent space of the generative model, and wherein the prompt is any of: text, an image, a speech signal; and wherein the prompt expresses a general instruction to orchestrate the composite computing system or service.

4. The method of any preceding claim wherein the image data comprises any of: one or more tiled images, one or more images depicting a graph of topology of the composite computing system or service, a two dimensional array of numerical values encoding a graph representing the composite computing system.

5. The method of any preceding claim wherein the image data comprises at least one tiled image comprising a plurality of tiles, each tile being a two dimensional shape, and wherein the number and properties of the tiles encode information which may converted to the script for orchestrating the composite computing system or service.

6. The method of claim 5 wherein at least one of the properties is: a degree of overlap of a tile with other tiles or a hue or a saturation.

7. The method of claim 5 or claim 6 comprising converting an image into a script by parsing the image to form a sequence of tiles, converting each tile in the sequence into a plurality of parameters and constraints, and adding the parameters and constraints to a structured text object.

8. The method of any preceding claim wherein the generative model has been trained using a loss function having a term which takes into account how well the simulation meets the criteria.

9. A composite computing system manager comprising:
a processor; and
a memory storing instructions which when executed by the processor cause the composite computing system manager to perform the method of any preceding claim.

10. The method or composite computing system of any preceding claim, wherein the composite computing system is a communications network.

11. A computer-implemented method of training a generative model comprising:
accessing a plurality of training examples, each training example comprising image data encoding information about how to orchestrate a composite computing system or a network service deployed in the composite computing system;
carrying out a first training phase by training an encoder and a decoder of the generative model using adversarial training and using the training examples;
carrying out a second training phase, subsequent to the first training phase, by training a latent diffuser of the generative model using the training examples.

12. The method of claim 11 wherein the training in the second training phase is semi-supervised training.

13. The method of claim 11 or 12 wherein the training in the second training phase uses a loss function having a term that takes into account how well a simulation of the composite computing system or service meets the criteria.

14. The method of any of claims 11 to 13 comprising collecting the training examples from empirical observations of scripts created by human users and by generating image data at random using a rule-based system.

15. A composite computing system comprising a composite computing system manager as claimed in claim 9.
